# EUROPÄISCHE PATENTANMELDUNG

(11) **EP 1 347 643 A1**
(43) Veröffentlichungstag der Anmeldung: **24.09.2003**
(21) Anmeldenummer: 02360097.6
(22) Anmeldetag: 21.03.2002
(51) Int. Cl.: H04N 7/10, H04N 7/173

(54) **System zum Verteilen von Fernsehprogrammen und zum Durchführen von Kommunikationsdiensten**

(71) Anmelder: ALCATEL, 75008 Paris (FR)
(72) Erfinder: Böttle, Dietrich, 73084 Salach (DE); Krimmel, Heinz-Georg, 70825 Korntal-Münchingen (DE)
(74) Vertreter: Brose, Gerhard

(57) **Zusammenfassung**

Die Erfindung betrifft ein System zum Verteilen von Fernsehprogrammen mit einem rundfunkartig betriebenen Fernsehverteilsystem (NL3) und mindestens einer Kabel-Verteilanlage (NL4) zum Anschluß einer Mehrzahl von Fernsehgeräten (TV), mit einer die Verteilanlage (NL4) an das Fernsehverteilsystem (NL3) anschließenden Zentraleinheit (CU), dem zum Durchführen von Kommunikationsdiensten mindestens eine Zelle (RBS-RT) eines zellularen Funk-Kommunikationsdienstes angehört, die über eine Anschlußeinheit (RT; NT) an der Zentraleinheit (CU) der Verteilanlage (NL4) angeschlossen ist, sowie eine Zentraleinheit einer Verteilanlage, ein Kommunikationsendgerät, eine Einsteckkarte für einen Computer und eine Anschlußeinheit.

## Beschreibung

Die Erfindung betrifft ein System zum Verteilen von Fernsehprogrammen nach dem Oberbegriff des Anspruchs 1, eine Zentraleinheit einer Verteilanlage nach dem Oberbegriff des Anspruchs 2, ein Kommunikationsendgerät nach dem Oberbegriff des Anspruchs 6, eine Einsteckkarte für einen Computer nach dem Oberbegriff des Anspruchs 7 und eine Anschlußeinheit nach dem Oberbegriff des Anspruchs 8. Die Erfindung betrifft weiter ein System nach dem Oberbegriff des Anspruchs 9 und eine Zentraleinheit einer Verteilanlage nach dem Oberbegriff des Anspruchs 10.

Derzeit existiert eine Vielzahl von Systemen zum Verteilen von Fernsehprogrammen bis zu den Antennensteckdosen von Verbrauchern. Am verbrauchernahen Ende weisen diese Systeme eine Kabel-Verteilanlage mit einer Zentraleinheit auf. Die Kabel-Verteilanlage ist im einfachsten Fall ein Koaxialkabel mit einer am Ende angebrachten Antennensteckdose. Dieses Kabel kann vorher noch durch andere Antennensteckdosen geschleift sein. Weiter können von diesem Kabel Stichleitungen mit weiteren Antennensteckdosen abzweigen. An der Zentraleinheit können auch bereits mehrere solcher Kabel parallel angeschlossen sein.

Die Zentraleinheit ist im einfachsten Fall eine Anschlußdose zum Anschluß an eine terrestrische Außenantenne. In der Regel sind hier mehrere Außenantennen angeschlossen, die zum Empfang aller lokal erreichbaren Fernsehprogramme dienen. Häufig ist auch eine Satelittenantenneneinrichtung angeschlossen.

Die Verteilanlage ist im weitesten Ausbaustadium die Verteilanlage einer Großgemeinschaftsantennenanlage, die insgesamt ein großes Baumnetz darstellt. Der Kern einer solchen Großgemeinschaftsantennenanlage (die "Wurzel" des "Baums") ist dann eine Kopfstation, die mit Antennen sowohl für terrestrisch empfangbare Fernsehprogramme als auch für über Satelliten ausgestrahlte Fernsehprogramme ausgerüstet ist und vielleicht auch noch über Kabel verteilte Fernsehprogramme zur Verteilung übernimmt. In der Regel erfolgt dabei zumindest auch noch eine Frequenzumsetzung einzelner Programme, um die Verteilanlage optimal auszunützen und dennoch gegenseitige Störungen auszuschließen. Aus Kapazitätsgründen, nicht aus grundsätzlichen Erwägungen, wird in diesem Fall jedoch die Erfindung eher auf einzelne Äste und nicht auf den gesamten Baum anzuwenden sein. Als Zentraleinheit dient in diesem Fall entweder, bei nur geringer Belastung, die Kopfstation selbst oder aber die verschiedenen Haus- oder Stockwerksverteiler. Hier kann auch die Übergabe zwischen mehreren Eigentümern oder Nutzern der Gesamtanlage erfolgen. Ein solcher Punkt wird herkömmlich auch als Übergabepunkt bezeichnet.

Bedingt sowohl durch die starke Zunahme der Nutzung des Internets wie auch durch die Öffnung des Kommunikationsnetzes für freie Anbieter steigt immer mehr der Wunsch und auch die Forderung, die bestehenden Verteilanlagen für bidirektionale Kommunikationsdienste mit verwenden zu können.

Der Erfindung liegt die Aufgabe zugrunde, Kabel-Verteilanlagen so zu ergänzen, daß sie auch für bidirektionale Kommunikationsdienste mit verwendet werden können.

Diese Aufgabe wird erfindungsgemäß gelöst durch ein System nach der Lehre des Anspruchs 1, eine Zentraleinheit einer Verteilanlage nach der Lehre des Anspruchs 2, ein Kommunikationsendgerät nach der Lehre des Anspruchs 6, eine Einsteckkarte für einen Computer nach der Lehre des Anspruchs 7 und eine Anschlußeinheit nach der Lehre des Anspruchs 8.

An der Zentraleinheit einer Verteilanlage (Hausverteilanlage, Gemeinschaftsantennenanlage) wird eine Anschlußeinheit eines zellularen Funk-Kommunikationsdienstes angeschlossen. Damit werden die Kommunikationsdienste in einer unteren Ebene über Kabel übertragen, während in einer darüberliegenden Ebene eine Funkübertragung mit Punkt-zu-Mehrpunkt-Eigenschaft vorliegt.

Ausgehend hiervon wurde dann erkannt, daß dann, wenn für die Kommunikationsdienste genügend Kapazität vorhanden ist, diese auch die Versorgung mit Fernsehprogrammen mit übernehmen können, womit dann das Fernsehverteilsystem und die speziell dafür erforderlichen Bauelemente und Baugruppen entfallen können.

Daraus resultiert dann ein System nach der Lehre des Anspruchs 9 und eine Zentraleinheit nach der Lehre des Anspruchs 10.

Weitere Ausgestaltungen der Erfindung sind den Unteransprüchen und der nachfolgenden Beschreibung zu entnehmen.

Im folgenden wird die Erfindung unter Zuhilfenahme der beiliegenden Zeichnungen weiter erläutert:
- Figur 1: zeigt ein erfindungsgemäßes System zum Verteilen von Fernsehprogrammen und zum Durchführen von Kommunikationsdiensten mit erfindungsgemäßen Zentral-einheiten und Anschlüssen für erfindungsgemäße Kommunikationsendgeräte.
- Figur 2: zeigt eine Kabel-Verteilanlage mit einer erfindungsgemäßen Zentraleinheit, einem erfindungsgemäßen Kommunikationsendgerät, einem Computer mit einer erfindungsgemäßen Einsteckkarte und einer erfindungsgemäßen Anschlußeinheit.

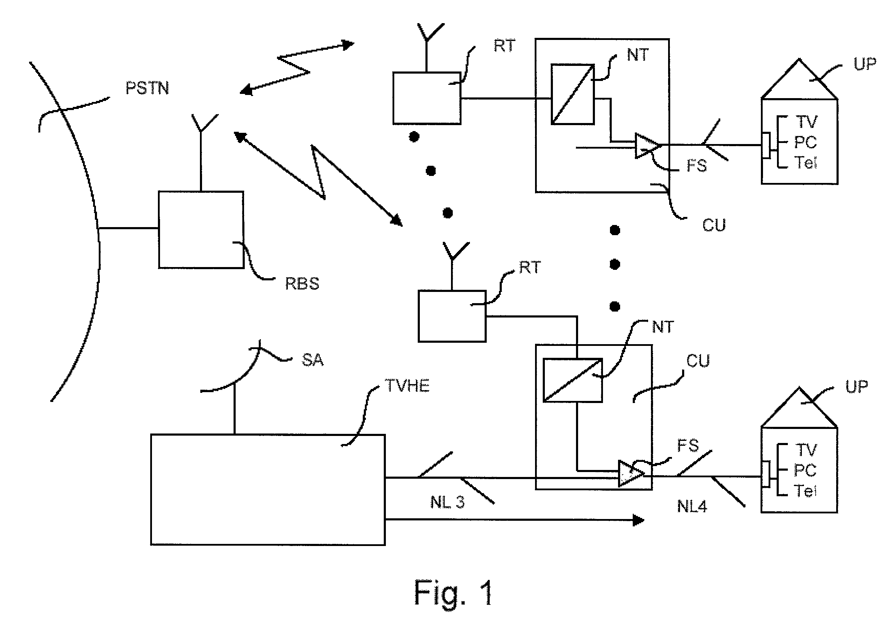

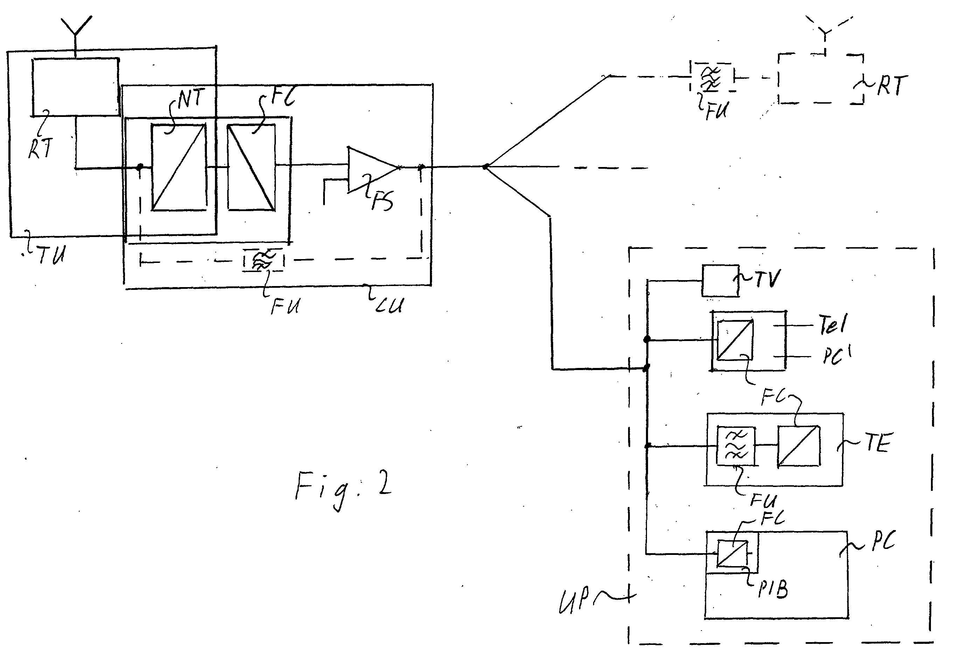

Figur 1 zeigt ein öffentliches Kommunikationsnetz CN, eine Funkbasisstation RBS, zwei Funk-Netzabschlusseinheiten RT, zwei Zentraleinheiten CU, die Räumlichkeiten UP zweier Verbraucher, sowie eine Fernseh-Kopfstation TVHE mit einer Satellitenantennenanlage SA. Die Zentraleinheiten CU weisen je eine Netzabschlußeinheit NT und eine Frequenzweiche FS auf. Die Räumlichkeiten UP eines Verbrauchers weisen je eine nicht näher bezeichnete Anschlußdose und ein kleineres Kabelnetz auf, an dem Anschlüsse für ein Fernsehendgerät TV, einen Computer PC und ein Telephon Tel dargestellt sind.

Derjenige Bereich, der zwischen den Endteilnehmern und der Zentraleinheit liegt, wird üblicherweise als Netzebene 4, NL4, bezeichnet. Der darüberliegende Bereich wird, soweit die Verteilung von Fernsehprogrammen betroffen ist, als Netzebene 3, NL3, bezeichnet.

Zumindest die Netzebene 4, NL4, ist derzeit mit Koaxialkabeln als Kabel-Verteilanlage ausgeführt. Es wird angenommen und für die vorliegende Erfindung auch unterstellt, daß dies auch weiterhin so ist. Der Übergang auf Glasfasernetze in diesem Bereich soll nicht ausgeschlossen werden. Die Netzebene 4, NL4, ist derzeit typischerweise in der Hand kleinerer Betreiber, wie Hauseigentümer-Gemeinschaften, Siedlungsgesellschaften oder lokale Handwerksbetriebe. Solche Betreiber haben oft eine eigene Antennenanlage, die sie dann als Fernseh-Kopfstation TVHE einsetzen. In diesen Fällen entfällt dann die Netzebene 3, NL3. Diese Betreiber haben jedoch üblicherweise keinen direkten Zugang zu öffentlichen Kommunikationsnetzen.

Nun werden erfindungsgemäß am Übergang zwischen der Netzebene 3, NL3, und der Netzebene 4, NL4, Kommunikationsdienste angebunden. An einem dort in der Regel ohnehin vorhandenen Verteiloder Übergabepunkt wird nun eine Frequenzweiche FS und eine Netzabschlußeinheit NT eingefügt und dieser Punkt zu einer erfindungsgemäßen Zentraleinheit CU ergänzt. Durch diese Netzabschlußeinheit NT wird nun über Funk ein Kommunikationsdienst angeschlossen. Hierzu ist die Funkbasisstation RBS an das öffentliche Kommunikationsnetz CN angeschlossen. Der Zentraleinheit CU ist eine Funk-Netzabschlußeinheit RT zugeordnet, die an der Netzabschlußeinheit NT dieser Zentraleinheit CU angeschlossen ist.

Als Funkbasisstation RBS ist hier erfindungsgemäß die Funkbasisstation einer Zelle eines zellularen Funk-Kommunikationsdienstes vorgesehen. Es ist also vorgesehen, daß die Ressourcen dieser Funkbasisstation nicht dieser einen Funk-Netzabschlußeinheit RT dauerhaft zugeordnet sind, sondern je nach Bedarf nach einem vorgegebenen Protokoll zugeteilt werden.

Es sind bereits verschiedene solcher Funk-Kommunikationsdienste bekannt. Ohne auf weitere Einzelheiten einzugehen, sei hier auf folgende bekannte Dienste oder Systeme verwiesen: GSM, DECT, UMTS. Ein hier besonders geeigneter Dienst ist LMDS (Local Multipoint Distribution Service). Dieser Dienst ist beispielsweise beschrieben in "LMDS Systems and their Application" von Agne Nordbotten in IEEE Communications Magazine, June 2000, auf den Seiten 150 - 154. Ein solches System und der damit verbundene Dienst ist besonders zugeschnitten auf breitbandige Hausanschlüsse, also auf Entfernungen im Bereich bis zu wenigen Kilometern und stationäre Anwendungen. Er arbeitet im Frequenzbereich von etwa 30 GHz mit einer Übertragungskapazität von etwa 30 Mbit/s. Grundsätzlich sind aber die anderen genannten Systeme mit gewissen Einschränkungen ebenso verwendbar, wie auch der Einsatz erst noch zu entwickelnder Systeme nicht ausgeschlossen ist. Auch der optische Bereich kann grundsätzlich als "Funkbereich" nicht ausgeschlossen werden, auch wenn derzeit keine optischen Punkt-zu-Mehrpunkt-Systeme bekannt sind.

Die jeweilige Basisstation eines solchen Systems wird von der vorliegenden Erfindung nicht betroffen.

Auf der Teilnehmerseite sind nun aber die Funktionen aufgeteilt. Dies wird anhand der Figur 2 näher erläutert. Diese zeigt einen Ausschnitt aus Figur 1 mit mehr Einzelheiten und teilweise auch zusätzlichen Einrichtungen.

Figur 2 zeigt eine Kabel-Verteilanlage CDS, die einerseits mit der Zentraleinheit CU und andererseits mit den Räumlichkeiten UP eines Verbrauchers verbunden ist. Die Kabel-Verteilanlage CDS ist hier einfach als Verzweigung einer von der Zentraleinheit CU kommenden Leitung dargestellt. Allgemein ist dies ein Netz mit einer Baumstruktur.

Die Zentraleinheit CU weist in diesem Beispiel die Netzabschlußeinheit NT, einen Formatumsetzer FC, die Frequenzweiche FS und einen optionalen Signalweg mit einer Filtereinheit FU auf. Funktioneller, aber nicht konstruktiver Bestandteil der Zentraleinheit CU ist die Funkabschlußeinheit RT. Diese Funkabschlußeinheit RT wiederum bildet eine funktionelle Einheit mit der Netzabschlußeinheit NT, die hier als Abschlußeinheit TU bezeichnet wird.

In den Räumlichkeiten UP eines Verbrauchers ist hier eine Kabelverzweigung dargestellt, an deren Enden einmal ein Fernsehendgerät TV, einmal eine Anschlußeinheit AU, einmal ein Kommunikationsendgerät TE und einmal ein Computer PC angeschlossen sind. Daß die Verteilung in der üblichen Weise korrekt ausgeführt, insbesondere impedanzmäßig angepaßt ist, wird unterstellt.

Das Fernsehendgerät TV bleibt von der vorliegenden Erfindung unberührt. Es wird zwar möglicherweise die Signale des Kommunikationsdienstes in einem seiner Frequenzkanäle empfangen und in die Basisfrequenz umsetzen können; es wird diese Signale aber nicht demodulieren können.

Um die Funktion der Anschlußeinheit AU verstehen zu können, muß nun ein kompletter Signalweg der Signale eines Kommunikationsdienstes betrachtet werden. Dabei wird primär der Signalweg vom öffentlichen Kommunikationsnetz CN zum Verbraucher (Endteilnehmer) hin betrachtet. Der umgekehrte Weg verläuft ganz analog, allenfalls sind die für die beiden Wege belegten Kapazitäten unterschiedlich.

Vom öffentlichen Kommunikationsnetz CN über die Funkbasisstation RBS und die Abschlußeinheit TU wird in einer an sich bekannten Weise ein Bündel von Datenströmen gleichzeitig übertragen. Auf der Seite des öffentlichen Kommunikationsnetzes CN und der Funkbasisstation RBS ändert sich durch die vorliegende Erfindung nichts. Die Funkabschlußeinheit RT ist ein mit einer Antenne verbundener und in der Regel auch mit dieser baulich vereinigter Eingangsverstärker mit Frequenzumsetzung. Die Zwischenfrequenz, in die umgesetzt wird, liegt im Bereich von etwa 1 GHz. Die anschließende Netzabschlußeinheit NT setzt einerseits in den Basisbandbereich um und wendet andererseits die Regeln des verwendeten Protokolls an, um an seinem Ausgang wieder das Bündel von Datenströmen, beispielsweise im bekannten Ethernetformat auszugeben. Dieses Signal kann im einfachsten Fall als Basisbandsignal über die Kabel-Verteilanlage zur Anschlußeinheit AU und zu den anderen angeschlossenen Geräten geführt werden. Am Einspeisepunkt der Fernsehprogrammsignale, hier der Frequenzweiche FS, muß dann dafür gesorgt werden, daß die Datenströme nicht auch dorthin zurückgespeist werden. Hierfür kann im einfachsten Fall ein Hochpaßfilter in Richtung zur Netzebene 3, NL3, ausreichen. Ein einfaches Verbinden der beiden Signalwege reicht an dieser Stelle nicht aus. Die hier erforderliche Koppeleinheit muß auf jeden Fall die beiden von der Kabel-Verteilanlage wegweisenden Anschlüsse gegeneinander entkoppeln.

In den meisten Fällen sind allerdings an den Verzweigungspunkten zur Impedanzanpassung Übertrager eingesetzt, wodurch nur gleichstromfreie Signale, also nicht solche im Basisband, übertragen werden können. Unter anderem deshalb wird das Bündel von Datenströmen bevorzugt in einen sonst nicht benutzten Fernsehkanal oder in mehrere zusammenhängende Fernsehkanäle umgesetzt. Dabei können durchaus auch zunächst Fernsehsignale in andere Kanäle umgesetzt werden, um das Bündel von Datenströmen immer gleich behandeln zu können. Hierzu dient der Formatumsetzer FC in der Zentraleinheit und ein entsprechender Formatumsetzer FC' in der Anschlußeinheit AU. In der Zentraleinheit CU muß hierzu die Frequenzweiche FS entsprechend aufgebaut sein. Entsprechende Filter ergeben sich für den Fachmann in bekannter Weise. Als "Format" oder auch "Protokoll" soll hier die Summe aller Eigenschaften, wie Normen, Frequenzen, Signalformate und dergleichen, angesehen werden, die hinzukommen müssen, um den eigentlichen Nutzinhalt des Signals übertragen zu können. Ähnlich ist auch der Begriff "Schnittstelle" zu sehen.

Gemäß der Erfindung ist nun noch vorgesehen, in der Anschlußeinheit AU dieses Bündel von Datenströmen in das Protokoll eines drahtgebundenen Kommunikationsdienstes umzusetzen. Für Deutschland kommt hierfür derzeit vor allem ISDN in Frage. Im Falle der Umsetzung nach ISDN könnte diese Anschlußeinheit AU wie in solchen Fällen üblich, zwei S-Null-Schnittstellen aufweisen. Die Anschlußeinheit AU könnte dann auch zu einer häuslichen Telefonzentrale ausgebaut sein, die möglicherweise mehrere Anschlüsse für analoge Telefon- oder beispielsweise Faxgeräte oder zum Anschluß einer DECT-Basisstation aufweisen. Eine solche Basisstation könnte auch Bestandteil der Anschlußeinheit AU selbst sein. Auch ein USB-Anschluß zum Anschluß eines Computers oder eine "Bluetooth"-Schnittstelle könnte hier vorhanden sein.

Anstelle einer solchen Anschlußeinheit AU ist an einem anderen Ende der Kabelverzweigung in den Räumlichkeiten UP dieses Verbrauchers ein Kommunikationsendgerät TE angeschlossen. Dieses Kommunikationsendgerät TE ist eine einfache Version einer Kombination einer Anschlußeinheit und eines daran angeschlossenen Endgeräts. Hier ist, im Gegensatz zur Anschlußeinheit AU, nicht nur ein Formatumsetzer FC', sondern auch eine Filtereinheit FU' eingezeichnet. Da hier immer nur bandbegrenzte Signale in der Frequenz umgesetzt werden können, muß die erforderliche Filterfunktion auf jeden Fall auf irgendeine Art und Weise sichergestellt sein.

An einem weiteren Ende der Kabelverzweigung in den Räumlichkeiten UP dieses Verbrauchers ist letztlich ein Computer PC mit integrierter Anschlußeinheit angeschlossen. Die Integration irgendwelcher Hardware-Komponenten in einen Computer erfolgt üblicherweise und auch hier durch Verwendung einer Einsteckkarte PIB, die zum "Mainboard" oder "Mother Board" des Computers hin eine genormte Schnittstelle aufweist und nach außen hin eine anwendungsspezifische Schnittstelle, hier also einen Anschluß an das hausinterne Kabelnetz.

Sollte die Kabel-Verteilanlage CDS nicht rein passiv aufgebaut sein, so muß dafür gesorgt werden, daß die hier zusätzlich verwendeten Signale durch die aktiven Teile nicht beeinträchtigt werden. Im einfachsten Fall können sie durch passive Filter überbrückt werden. Auf jeden Fall muß berücksichtigt werden, daß jetzt in beide Richtungen Signale übertragen werden, wenn in der vorangehenden Beschreibung auch im wesentlichen nur die Richtung vom öffentlichen Netz zu den Verbrauchern hin näher beschrieben wurde.

In der Zentraleinheit CU ist noch ein optionaler Signalweg mit einer Filtereinheit FU eingezeichnet. Dieser kann benutzt werden, wenn die Zentraleinheit, die am Ausgangspunkt der baumartig strukturierten Kabel-Verteilanlage CDS liegen muß, für den Empfang der von der Funkbasisstation kommenden Signale ungeeignet liegt, beispielsweise weil die Fernsehprogrammsignale von einem im Erdreich verlegten Kabelfernsehsystem kommen. In diesem Fall bietet es sich an, die Kabel-Verteilanlage CDS zur Verbindung zwischen der Funkabschlußeinheit RT und der Zentraleinheit CU zu verwenden. Dies setzt voraus, daß noch ein ausreichend breiter Frequenzbereich frei ist und in der Zentraleinheit CU und unter Umständen auch am Anschluß zur Funkabschlußeinheit RT mit je einer Filtereinheit FU abgetrennt wird.

Jede Einrichtung, die geeignet ist, Kommunikationsdienste anzubieten, kann zwangsläufig auch solche Dienste anbieten, die an sich nur einseitig gerichtet sind und bei denen die Gegenrichtung nur zur Steuerung mit verwendet wird. Im vorliegenden Beispiel ist so viel Kapazität vorhanden, daß durchaus auch Fernsehprogramme mit über den Kommunikationsdienst übertragen werden können. In letzter Konsequenz kann damit das Fernsehverteilsystem entfallen. Damit entfallen dann auch die entsprechenden, nur für die korrekte Zusammenarbeit zwischen dem Fernsehverteilsystem und den Einrichtungen der Kommunikationsdienste erforderlichen Bauelemente und Baugruppen.

Übrig bleiben die Einrichtungen zur Durchführung von Kommunikationsdiensten, die zunächst, am teilnehmerfernen Ende des Zugangsbereichs, mindestens eine Zelle eines zellularen Funk-Kommunikationsdienstes aufweisen, an den sich dann, am teilnehmernahen Ende, eine Kabel-Verteilanlage anschließt. Dabei soll nicht ausgeschlossen werden, daß, wie heute keineswegs unüblich, mindestens einzelne Endgeräte wieder über Funk angebunden sind.

Abschließend soll noch darauf hingewiesen werden, daß die Erfindung auch weitgehend aus Komponenten zusammengestellt werden kann, die bereits bekannt und zum Teil auf dem Markt erhältlich sind. Beispielsweise kann die Ein- und Auskopplung der Datenströme in die bzw. aus der Kabel-Verteilanlage durch sogenannte Kabelmodems erfolgen. Die Zentraleinheit CU besteht dann im wesentlichen beispielsweise aus einer LMDS-Anschlußeinheit und einer Kabelmodemanschl.

## Patentansprüche

1. System zum Verteilen von Fernsehprogrammen mit einem rundfunkartig betriebenen Fernsehverteilsystem (NL3) und mindestens einer Kabel-Verteilanlage (NL4, CDS) zum Anschluß einer Mehrzahl von Fernsehgeräten (TV), mit einer die Verteilanlage (NL4, CDS) an das Fernsehverteilsystem (NL3) anschließenden Zentraleinheit (CU), **dadurch gekennzeichnet, daß** zum Durchführen von Kommunikationsdiensten mindestens eine Zelle (RBS-RT) eines zellularen Funk-Kommunikationsdienstes vorhanden und über eine Anschlußeinheit (RT, NT; TU) an der Zentraleinheit (CU) der Verteilanlage (NL4, CDS) angeschlossen ist.

2. Zentraleinheit (CU) einer Verteilanlage (NL4, CDS) mit einem Anschluß für ein Fernsehverteilsystem (NL4) und mindestens einem Anschluß für eine Kabel-Verteilanlage (NL4, CDS) zum Anschluß einer Mehrzahl von Fernsehgeräten (TV), **dadurch gekennzeichnet, daß** die Zentraleinheit (CU) eine Koppeleinheit (FS) aufweist, die geeignet ist, Signale von und für eine Anschlußeinheit eines zellularen Funk-Kommunikationsdienstes zusätzlich zu den Signalen des Fernsehverteilsystems (NL4) in die Kabel-Verteilanlage (NL4, CDS) einzuspeisen bzw. aus dieser auszukoppeln.

3. Zentraleinheit (CU) nach Anspruch 2, **dadurch gekennzeichnet, daß** eine Netzabschlußeinheit (NT) Bestandteil der Zentraleinheit (CU) ist, wobei die Netzabschlußeinheit (NT) zusammen mit einer Funkabschlußeinheit (RT) eine Anschlußeinheit (RT, NT; TU) eines zellularen Funk-Kommunikationsdienstes darstellt.

4. Zentraleinheit (CU) nach Anspruch 2, **dadurch gekennzeichnet, daß** sie eine Filtereinheit (FS) aufweist, um aus den Signalen der Kabel-Verteilanlage (NL4, CDS) Signale auszukoppeln und andere in diese einzukoppeln, die von einer Netzabschlußeinheit (NT) eines zellularen Funk-Kommunikationsdienstes kommen bzw. für diese bestimmt sind.

5. Zentraleinheit (CU) nach Anspruch 3, **dadurch gekennzeichnet, daß** sie zwischen der Netzabschlußeinheit (NT) und der Koppeleinheit (FS) einen Formatumsetzer (FC) aufweist.

6. Kommunikationsendgerät (TE) zum Anschluß an eine Kabel-Verteilanlage (NL4, CDS) im System nach Anspruch 1, **dadurch gekennzeichnet, daß** das Kommunikationsendgerät (TE) einen Formatumsetzer (FC') zum Abtrennen von Signalen aufweist, die von einem zellularen Funk-Kommunikationsdienst kommen.

7. Einsteckkarte (PIB) für einen Computer zum Anschluß an eine Kabel-Verteilanlage (NL4, CDS) im System nach Anspruch 1, **dadurch gekennzeichnet, daß** die Einsteckkarte (PIB) einen Formatumsetzer (FC') zum Abtrennen von Signalen aufweist, die von einem zellularen Funk-Kommunikationsdienst kommen.

8. Anschlußeinheit (AU) zum Anschluß an eine Kabel-Verteilanlage (NL4, CDS) im System nach Anspruch 1, **dadurch gekennzeichnet, daß** die Anschlußeinheit (AU) einen Formatumsetzer (FC) zum Abtrennen von Signalen eines zellularen Funk-Kommunikationsdienstes und weiter einen Protokollumsetzer zur Umsetzung der Signale eines zellularen Funk-Kommunikationsdienstes in Signale eines drahtgebundenen Kommunikationsdienstes, insbesondere in ISDNoder DSL-Signale, aufweist.

9. System mit einer Kabel-Verteilanlage (NL4, CDS) und einer die Verteilanlage (NL4, CDS) am teilnehmerfernen Ende abschließenden Zentraleinheit (CU), **dadurch gekennzeichnet, daß** weiter eine Zelle (RBS-RT) eines zellularen Funk-Kommunikationsdienstes vorhanden und über eine Anschlußeinheit (RT, NT; TU) an der Zentraleinheit (CU) der Verteilanlage (NL4, CDS) angeschlossen ist.

10. Zentraleinheit (CU) einer Verteilanlage (NL4, CDS) mit mindestens einem Anschluß für eine Kabel-Verteilanlage (NL4, CDS), **dadurch gekennzeichnet, daß** eine Netzabschlußeinheit (NT) Bestandteil der Zentraleinheit (CU) ist, wobei die Netzabschlußeinheit (NT) zusammen mit einer Funkabschlußeinheit (RT) eine Anschlußeinheit (RT, NT; TU) eines zellularen Funk-Kommunikationsdienstes darstellt.
